# EUROPÄISCHE PATENTSCHRIFT

(11) **EP 1 544 444 B1**
(45) Veröffentlichungstag und Bekanntmachung des Hinweises auf die Patenterteilung: **07.05.2008**
(21) Anmeldenummer: 04105671.4
(22) Anmeldetag: 10.11.2004
(51) Int. Cl.: F02D 41/14, F02P 5/04

(54) **Verfahren zum Steuern des Zündzeitpunktes in einer Otto-Brennkraftmaschine**
Method of controlling the ignition angle of an internal combustion engine
Procédé de commande de l'angle d'allumage d'un moteur à combustion interne

(30) Priorität: 15.12.2003 DE 10358701
(43) Veröffentlichungstag der Anmeldung: 22.06.2005
(73) Patentinhaber: SIEMENS AKTIENGESELLSCHAFT, 80333 München (DE)
(72) Erfinder: Koch, Achim, 93105, Tegernheim (DE)

(56) Entgegenhaltungen:
- DE-C- 10 236 979
- LU-A- 90 727
- US-A- 5 834 629
- US-A- 5 904 127
- US-A1- 2002 069 696
- US-A1- 2003 080 745
- US-B1- 6 196 054
- US-B1- 6 205 844
- US-B1- 6 550 456
- SPICHER, FENG, KÖLMEL: "HC-Rohemission beim Kaltstart in der Warmlaufphase sowie bei Last- und Drehzalsprüngen" Juli 1999 (1999-07), INSTITUT FÜR KOLBENMASCHINEN UNIVERSITÄT KARLSRUHE (TH) , XP002313988 * Zusammenfassung * * Seite 1, Zeile 20 - Seite 1, Zeile 28 *

## Beschreibung

Die vorliegende Erfindung betrifft ein Verfahren zum Steuern des Zeitpunkts zum Auslösen der Zündung (Zündzeitpunkt) einer Zündeinrichtung in einer Otto-Brennkraftmaschine mit Direkteinspritzung und strahlgeführtem Brennverfahren.

Die Zündung in einer fremdgezündeten Otto-Brennkraftmaschine wird heute in Abhängigkeit von verschiedenen Betriebsparametern der Brennkraftmaschine gesteuert. Darunter befinden sich insbesondere die Last und Drehzahl der Brennkraftmaschine, die Kolbenposition und der Klopfzustand, um nur die wichtigsten zu nennen. Die Berechnung des Zündzeitpunktes wird von dem elektronischen Betriebssteuergerät (Motorsteuerung) der Brennkraftmaschine abhängig von diesen Parametern in Bezug auf die Erfassung des Kurbelwellenwinkels (°KW) berechnet. Dies erlaubt es, den Zündzeitpunkt bis auf ca. 0,1°KW genau vorzugeben und einzustellen.

Das strahlgeführte Brennverfahren in der Otto-Brennkraftmaschine ist darauf angewiesen, dass zum Zeitpunkt der Zündung eine zündfähige Gemischwolke an der Zündeinrichtung vorhanden ist. Hierzu ist erforderlich, dass das Kraftstoff/Luft-Gemisch im Zündbereich einen vorgegebenen Wert erreicht, dass also ausreichend Kraftstoff im Zündbereich vorhanden ist. Falls aus irgendwelchen Gründen kein oder zu wenig Kraftstoff vorhanden ist, kann die Gemischwolke durch die Zündeinrichtung nicht entflammt werden. Dies kann insbesondere dann eintreten, wenn zwar eine gewünschte Gemischwolke entsteht, aber nicht zum eingestellten Zündzeitpunkt. Verursacht wird dies im allgemeinen dadurch, dass aufgrund von Unzulänglichkeiten des Kraftstoffinjektors (Fertigungstoleranzen, Verschmutzungen, Alterungen, etc.) die Strahlaufbereitung und -ausbreitung mangelhaft sind. Es kommt dann zu Verbrennungsaussetzern, einem Anstieg der Schadstoffemissionen und Fahrbarkeitsnachteilen.

Aus DE 102 36 979 C1 und der in der Beschreibungseinleitung dieser Druckschrift genannten DE 196 14 388 C1 ist es bekannt, dass ein Ionisationssignal zur Steuerung des Zündzeitpunktes verwendet werden kann. Der Druckschrift LU 90 727 A lässt sich die Lehre entnehmen, die Änderungen eines Ionenstromsignals zu Beginn der Flammausbreitung als Kriterium dafür zu benutzen, festzustellen, ob der Zündzeitpunkt adaptiert werden soll oder nicht.

Der vorliegenden Erfindung liegt die Aufgabe zugrunde, ein Verfahren zum Steuern des Zeitpunktes zum Auslösen der Zündung einer Zündeinrichtung in einer Otto-Brennkraftmaschine mit Direkteinspritzung und strahlgeführtem Brennverfahren anzugeben, das den Zustand des Kraftstoff/Luft-Gemisches im Zündbereich berücksichtigt.

Diese Aufgabe wird durch das im Patentanspruch 1 definierte Verfahren gelöst.

Das erfindungsgemäße Verfahren geht davon aus, dass ein Zündzeitpunkt in üblicher Weise in Abhängigkeit von Betriebsparametern der Brennkraftmaschine wie Last und Drehzahl vorgegeben wird. Der vorgegebene Zündzeitpunkt wird dann in Abhängigkeit von einem Ionisationssignal, das den Ionisierungszustand des Kraftstoff/Luft-Gemisches im Zündbereich der Zündeinrichtung darstellt, so korrigiert, dass im Zündzeitpunkt eine möglichst optimale Zündfähigkeit des Gemisches im Zündbereich vorhanden ist.

Das Ionisationssignal (Ionenstromsignal) wird nach irgendeiner vorbekannten Messmethode gewonnen. Ionisierungssignale werden beispielsweise bereits zur Klopfregelung, zum Überprüfen von Verbrennungsaussetzer-Erkennungseinrichtungen (z.B. DE 198 11 628 A1) und dergl. verwendet.

Die Korrektur des vorgegebenen Zündzeitpunktes stellt gewissermaßen eine überlagerte "Regelung" bzw. "Feinregelung" des Zündzeitpunktes dar, durch die der tatsächliche Zündzeitpunkt kurz vor oder kurz nach den berechneten (vorgegebenen) Zündzeitpunkt verlegt wird. Die tatsächliche Zündung erfolgt dann zu einem Zeitpunkt, zu dem aufgrund des Ionisationssignals auf eine zündfähige Gemischwolke im Zündbereich geschlossen werden kann.

Erfindungsgemäß wird die Zündung ausgelöst, sobald das Ionisationssignal oder eine davon abhängige Größe wie z.B. der λ-Wert des Kraftstoff/Luft-Gemisches eine Auslöseschwelle erreicht hat, sofern die Auslöseschwelle innerhalb eines vorgegebenen relativ kleinen Zeitbereiches erreicht wird.

Im übrigen erfolgt die Auslösung der Zündung, wenn die Auslöseschwelle bereits vor dem vorgegebenen Zeitbereich erreicht wird, erst zu Beginn des vorgegebenen Zeitbereiches und, wenn die Auslöseschwelle nicht vor Ablauf des vorgegebenen Zeitbereiches erreicht wird, am Ende des vorgegebenen Zeitbereiches. Im letzteren Fall sollte die Zündung mit einer besonders hohen Zündenergie erfolgen, um die möglicherweise schlechtere Entflammbarkeit des Kraftstoff/Luft-Gemisches im Zündbereich "auszugleichen".

Durch die Vorgabe des Zeitbereiches wird sichergestellt, dass der vorgegebene Zündzeitpunkt durch die erfindungsgemäß vorgesehene Korrektur in Abhängigkeit von dem Ionisationssignal nur um kleine Werte verändert wird. Ansonsten besteht die Gefahr, dass die Sollwerte für das Drehmoment der Brennkraftmaschine nicht eingehalten werden können.

Schwankungen in der Ausbreitung des Kraftstoff/Luft-Gemisches und damit Zustände mangelnder Zündfähigkeit des Gemisches im Zündbereich treten insbesondere bei Teillast auf, wenn die Brennkraftmaschine im Schichtbetrieb mit magerem Kraftstoff/Luft-Gemisch arbeitet. Die Korrektur des vorgegebenen Zündzeitpunktes in Abhängigkeit von dem Ionisationssignal kann daher auf den Schichtbetrieb der Brennkraftmaschine beschränkt werden.

Ferner kann es zweckmäßig sein, eine Adaption des Ionisati onssignals in bestimmten Betriebsbereichen vorzunehmen. Wenn beispielsweise die Bewegung des Gemisches im Brennraum gering ist, was insbesondere für den Leerlauf der Brennkraftmaschine zutrifft, so sollte das Ionisationssignal so adaptiert werden, dass es einen entsprechend großen Abstand zur Rauschgrenze hat.

Weitere vorteilhafte Ausgestaltungen der Erfindung gehen aus den Unteransprüchen hervor.

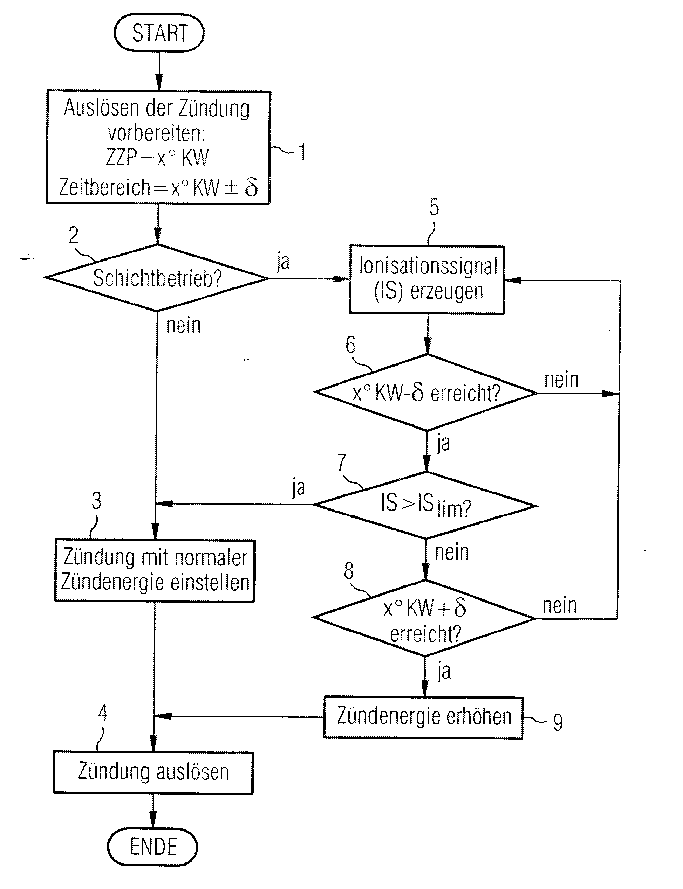

Anhand der einzigen Figur, die ein Flussdiagramm eines Ausführungsbeispiels des erfindungsgemäßen Verfahrens darstellt, werden weitere Einzelheiten der Erfindung erläutert.

Das Flussdiagramm veranschaulicht ein Ausführungsbeispiel für ein Verfahren zum Steuern des Zeitpunktes zum Auslösen der Zündung (des Zündzeitpunktes) in einer Otto-Brennkraftmaschine (nicht gezeigt) mit Direkteinspritzung und strahlgeführtem Brennverfahren.

Wie sich dem Flussdiagramm entnehmen lässt, wird in einem Schritt 1 das Auslösen der Zündung vorbereitet. Hierzu wird der Zündzeitpunkt ZZP in Abhängigkeit von beispielsweise Last und Drehzahl der Brennkraftmaschine von dem elektronischen Betriebssteuergerät (nicht gezeigt) der Brennkraftmaschine errechnet bzw. einem Kennfeld entnommen. Dieser vorgegebene Zündzeitpunkt ZZP wird üblicherweise in Grad des Kurbelwellenwinkels (x°KW) angegeben. Da die Gewinnung eines derartigen vorgegebenen Zündzeitpunktes im Stand der Technik bekannt ist, wird hierauf nicht näher eingegangen.

Dem vorgegebenen Zündzeitpunkt (x°KW) wird ein Zeitbereich (x°KW ± δ) zugeordnet, innerhalb dessen die Zündung auf jeden Fall ausgelöst werden soll. Wie bereits in der Beschreibungseinleitung erläutert, sollte der tatsächliche Zündzeitpunkt gegenüber dem vorgegebenen Zündzeitpunkt nur geringfügig korrigiert werden, um sicherzustellen, dass die Sollwerte des Drehmomentes erreicht werden. Der vorgegebene Zeitbereich x°KW ± δ kann beispielsweise in der Größenordnung von 2-6°KW liegen.

In einem Schritt 2 wird geprüft, ob sich die Brennkraftmaschine im Schichtbetrieb befindet. Wenn nämlich die Brennkraftmaschine bei Volllast mit einem Luftverhältnis von λ = 1 betrieben wird, so ist eine Korrektur des vorgegebenen Zündzeitpunktes im allgemeinen nicht erforderlich. Gemäß den Schritten 3 und 4 kann dann die Zündung mit normaler Zündenergie eingestellt und ausgelöst werden.

Befindet sich dagegen die Brennkraftmaschine bei Teillast im Schichtbetrieb mit magerer Verbrennung, so wird im Schritt 5 ein Ionisationssignal IS erzeugt, das den Zustand des Kraftstoff/Luft-Gemisches im Zündbereich charakterisiert. Das Ionisationssignal kann beispielsweise in der Weise gewonnen werden, dass eine konstante Spannung an die als Zündeinrichtung dienende Zündkerze angelegt und der elektrische Widerstand der Ionisationsstrecke zwischen den Elektroden der Zündkerze gemessen wird. Der Widerstand der Ionisationsstrecke ändert sich in Abhängigkeit von der Menge des in der Ionisationsstrecke vorhandenen Kraftstoffs. Das Ionisationssignal ist somit unmittelbar mit dem Luftverhältnis λ im Zündbereich verknüpft, so dass für die nun folgende Korrektur des Zündzeitpunktes anstelle des Ionisationssignals IS auch das hieraus abgeleitete Luftverhältnis λ verwendet werden könnte.

Da im übrigen im Stand der Technik zahlreiche technische Verfahren zum Messen des Ionisationszustandes im Zündbereich bekannt sind, wird hierauf nicht näher eingegangen. Zu beachten ist jedoch, dass im Schritt 5 das Ionisationssignal mit einer hohen Abtastfrequenz von beispielsweise 0,1°KW gewonnen wird, so dass das daran anschließende Korrekturverfahren in entsprechend kleinen Schritten abläuft.

In einem Schritt 6 wird zunächst geprüft, ob bereits der Beginn des vorgegebenen Zeitbereiches x°KW ± δ erreicht ist. Ist dies nicht der Fall, so kehrt das Programm zu dem Schritt 5 zurück.

Wenn der Beginn des vorgegebenen Zeitbereiches erreicht ist, wird in einem Schritt 7 geprüft, ob das Ionisationssignal IS eine Auslöseschwelle ISₗᵢₘ überschritten hat. Falls dies der Fall ist, so ist dies ein Zeichen dafür, dass im Zündbereich eine zündfähige Gemischwolke vorliegt. Es kann dann gemäß den Schritten 3 und 4 die Zündung mit normaler Zündenergie eingestellt und ausgelöst werden.

Hat das Ionisationssignal IS die Auslöseschwelle ISₗᵢₘ noch nicht erreicht, so wird in einem Schritt 8 geprüft, ob sich das Korrekturverfahren noch in dem vorgegebenen Zeitbereich von x°KW ± δ befindet. Solange das Ende des vorgegebenen Zeitbereiches nicht erreicht ist, geht das Programm zu dem Schritt 5 zurück. Wenn jedoch nach Ablauf des vorgegebenen Zeitbereichs das Ionisationssignal IS die Auslöseschwelle ISₗᵢₘ noch nicht erreicht hat, wird die Zündung dennoch ausgelöst. Hierbei wird zunächst in einem Schritt 9 die Zündenergie erhöht, um die möglicherweise schlechte Entflammbarkeit des Kraftstoff/Luft-Gemisches im Zündbereich zu berücksichtigen.

Die Zündenergie kann z.B. in der Weise erhöht werden, dass an die Zündkerze eine erhöhte Spannung angelegt wird und/oder eine Funkenbandzündung mit mehreren sequentiellen Zündungen durchgeführt wird oder dass beispielsweise bei einer Hochspannungs-/Hochfrequenzzündung (Plasmazündung) die Funkendauer erhöht wird.

Wenn dann die Zündung mit erhöhter Zündenergie eingestellt ist, kann die Zündung gemäß dem Schritt 4 ausgelöst werden.

Das beschriebene Korrekturverfahren sorgt somit für eine "Feinregelung" der Zündung, durch die der tatsächliche Zündzeitpunkt an die beim strahlgeführten Brennverfahren vorhandenen Schwankungen der Gemischausbreitung angepasst wird. Das hierbei verwendete Ionisationssignal stellt ein systemimmanentes Signal dar, das aus der Zündeinrichtung selbst gewonnen wird. Die für das Korrekturverfahren erforderliche "Software" kann ohne weiteres in das elektronische Betriebssteuergerät (Motorsteuerung) der Brennkraftmaschine integriert sein. Statt dessen kann die entsprechende Funktion auch von einem speziellen Baustein wie einem IC oder einem gesonderten Prozessor ausgeführt werden.

## Patentansprüche

1. Verfahren zum Steuern des Zeitpunktes zum Auslösen der Zündung (Zündzeitpunkt) einer Zündeinrichtung in einer Otto-Brennkraftmaschine mit Direkteinspritzung und strahlgeführtem Brennverfahren, bei dem ein Zündzeitpunkt (x°KW) in Abhängigkeit von Betriebsparametern der Brennkraftmaschine vorgegeben wird und der vorgegebene Zündzeitpunkt (x°KW) in Abhängigkeit von einem Ionisationssignal (IS), das den Ionisierungszustand des Kraftstoff/Luft-Gemisches im Zündbereich der Zündeinrichtung darstellt, im Sinne einer verbesserten Zündfähigkeit des Gemisches korrigiert wird, indem die Zündung ausgelöst wird, sobald das Ionisationssignal (IS) oder eine davon abhängige Größe (λ) eine Auslöseschwelle (ISₗᵢₘ) erreicht, sofern die Auslöseschwelle innerhalb eines vorgegebenen Zeitbereiches (x°KW ± δ) erreicht wird.

2. Verfahren nach Anspruch 1, bei dem eine Zündkerze als Zündeinrichtung verwendet wird,
**dadurch gekennzeichnet, dass** das Ionisationssignal (IS) durch Messen des Ionisierungszustandes zwischen den Elektroden der Zündkerze gewonnen wird.

3. Verfahren nach Anspruch 1 oder 2,
**dadurch gekennzeichnet, dass** die Zündung, wenn die Auslöseschwelle (ISₗᵢₘ) bereits vor dem vorgegebenen Zeitbereich (x°KW ± δ) erreicht wird, erst zu Beginn des vorgegebenen Zeitbereiches ausgelöst wird.

4. Verfahren nach Anspruch 1 oder 2,
**dadurch gekennzeichnet, dass** die Zündung, wenn die Auslöseschwelle (ISₗᵢₘ) nicht vor Ablauf des vorgegebenen Zeitbereichs (x°KW ± δ) erreicht wird, am Ende des vorgegebenen Zeitbereichs ausgelöst wird.

5. Verfahren nach Anspruch 4,
**dadurch gekennzeichnet, dass** die Zündung am Ende des vorgegebenen Zeitbereichs (x°KW ± δ) mit gegenüber der normalen Zündenergie erhöhter Zündenergie ausgelöst wird.

6. Verfahren nach einem der vorhergehenden Ansprüche,
**dadurch gekennzeichnet, dass** die Korrektur des vorgegebenen Zündzeitpunktes in Abhängigkeit von dem Ionisationssignal (IS) nur im Schichtbetrieb der Brennkraftmaschine vorgenommen wird.

7. Verfahren nach einem der vorhergehenden Ansprüche,
**dadurch gekennzeichnet, dass** eine Adaption des Ionisationssignals in Abhängigkeit von der Ladungsbewegung im Brennraum oder anderen Betriebsbedingungen der Brennkraftmaschine vorgenommen wird.

## Claims

1. Method for controlling the point for triggering the ignition (ignition point) of an ignition apparatus in a spark-ignition type internal combustion engine with direct injection and jet-controlled combustion method, wherein an ignition point (x °KW) is predetermined as a function of operating parameters of the internal combustion engine and the predetermined ignition point (x °KW) is corrected as a function of an ionisation signal (IS), which represents the state of ionisation of the fuel/air mixture in the ignition region of the ignition apparatus, to improve the ignitability of the mixture, in that ignition is triggered as soon as the ionisation signal (IS) or a variable (λ) dependent thereon reaches a trigger threshold (ISₗᵢₘ), in so far as the trigger threshold is reached within a predetermined time range (x °KW ± δ).

2. Method according to claim 1, wherein a spark plug is used as the ignition apparatus,
**characterised in that** the ionisation signal (IS) is obtained by measuring the ionisation state between the electrodes of the spark plug.

3. Method according to claim 1 or 2,
**characterised in that** if the trigger threshold (ISₗᵢₘ) is already reached before the predetermined time range(x °KW ± δ), ignition is only triggered at the start of the predetermined time range.

4. Method according to claim 1 or 2,
**characterised in that** if the trigger threshold (ISₗᵢₘ) is not reached before the end of the predetermined time range(x °KW ± δ), ignition is triggered at the end of the predetermined time range.

5. Method according to claim 4,
**characterised in that** ignition is triggered at the end of the predetermined time range(x °KW ± δ) with increased ignition energy compared with the normal ignition energy.

6. Method according to one of the preceding claims,
**characterised in that** the predetermined ignition time is only corrected as a function of the ionisation signal (IS) in stratified operation of the internal combustion engine.

7. Method according to one of the preceding claims,
**characterised in that** the ionisation signal is adjusted as a function of the charging movement in the combustion chamber or other operating conditions of the internal combustion engine.

## Revendications

1. Procédé pour commander le moment pour le déclenchement de l'allumage (point d'allumage) d'un dispositif d'allumage dans un moteur à combustion interne et à allumage commandé avec injection directe et procédé de combustion guidé par jet, dans lequel un point d'allumage (x°KW) est prédéfini en fonction de paramètres de service du moteur à combustion interne et le point d'allumage prédéfini (x°KW) est corrigé en fonction d'un signal d'ionisation (IS) qui représente l'état d'ionisation (IS) du mélange air/carburant dans la zone d'allumage du dispositif d'allumage, dans le sens d'une inflammabilité améliorée du mélange en déclenchant l'allumage dès que le signal d'ionisation (IS) ou une grandeur (λ) dépendante de celui-ci a atteint un seuil de déclenchement (ISₗᵢₘ) dans la mesure où le seuil de déclenchement est atteint dans les limites d'une plage de temps prédéfinie (x°KW ± δ).

2. Procédé selon la revendication 1, dans lequel une bougie est utilisée comme dispositif d'allumage,
**caractérisé en ce que** le signal d'ionisation (IS) est obtenu par le mesurage de l'état d'ionisation entre les électrodes de la bougie.

3. Procédé selon la revendication 1 ou 2,
**caractérisé en ce que** l'allumage n'est déclenché qu'au début de la plage de temps prédéfinie lorsque le seuil de déclenchement (ISₗᵢₘ) est atteint déjà avant la plage de temps prédéfinie (x°KW ± δ).

4. Procédé selon la revendication 1 ou 2, **caractérisé en ce que** l'allumage est déclenché à la fin de la plage de temps prédéfinie lorsque le seuil de déclenchement (ISₗᵢₘ) n'est pas atteint avant l'expiration de la plage de temps (x°KW ± δ) prédéfinie.

5. Procédé selon la revendication 4, **caractérisé en ce que** l'allumage est déclenché à la fin de la plage de temps (x°KW ± δ) prédéfinie avec une énergie d'allumage élevée par rapport à l'énergie d'allumage normale.

6. Procédé selon l'une quelconque des revendications précédentes, **caractérisé en ce que** la correction du point d'allumage prédéfini est effectuée en fonction du signal d'ionisation (IS) seulement en mode stratifié du moteur à combustion interne.

7. Procédé selon l'une quelconque des revendications précédentes, **caractérisé en ce qu'**une adaptation du signal d'ionisation est effectuée en fonction du mouvement de charge dans la chambre de combustion ou d'autres conditions de service du moteur à combustion interne.
